(19) Europäisches Patentamt
European Patent Office
Office européen des brevets

(11) **EP 2 180 484 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(21) Anmeldenummer: **09013253.1**

(22) Anmeldetag: **21.10.2009**

(51) Int Cl.:
**G21K 1/06** *(2006.01)*　　**G21K 1/16** *(2006.01)*

(54) **Strahlungsoptisches Bauelement zur Beeinflussung von Strahlung in Bezug auf deren Wellenlängenspektrum**

Beam-optical component for influencing radiation depending on its wavelength spectrum

Composant optique de rayonnement pour l'influence du rayonnement en fonction de son spectre de longueurs d'ondes

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.10.2008 DE 102008052410**

(43) Veröffentlichungstag der Anmeldung:
**28.04.2010 Patentblatt 2010/17**

(73) Patentinhaber: **Helmholtz-Zentrum Berlin für Materialien und Energie GmbH 14109 Berlin (DE)**

(72) Erfinder: **Krist, Thomas 10627 Berlin (DE)**

(74) Vertreter: **Rudolph, Margit et al Helmholtz-Zentrum Berlin Drittmittelmanagement/Patente Hahn-Meitner-Platz 1 14109 Berlin (DE)**

(56) Entgegenhaltungen:
DE-A1- 19 844 300　　DE-A1- 19 936 899
DE-A1-102004 031 934　　FR-A1- 2 679 064

**Beschreibung**

Die Erfindung bezieht sich auf ein Verfahren zur Positionierung eines strahlungsoptischen Bauelements zur Beeinflussung eines Neutronenstrahls in Bezug auf dessen Wellenlängenspektrum, aufweisend mindestens eine Schichtenfolge aus einer neutronenleitenden, ebene und parallele Wände aufweisenden Schicht mit einer Kanalbreite (d), die beidseitig mit einer bis zu einem kritischen Einfallswinkel $\Theta_c$ zur Schichtoberfläche ganz oder teilweise strahlungsreflektierenden Schicht versehen ist, und diese wiederum jeweils mit einer neutronenabsorbierenden Schicht versehen sind.

Die Neutronenstrahlung dient einem breiten Spektrum wissenschaftlicher Untersuchungen von der reinen Grundlagenforschung bis hin zu anwendungsnahen Untersuchungen beispielsweise auf dem Gebiet der Materiestrukturforschung. Um spezielle Untersuchungen an einer Probe durchführen zu können, muss die Strahlung spezielle Eigenschaften aufweisen. Hierbei kann es sich insbesondere um einen bestimmten Wellenlängenbereich oder um eine bestimmte Divergenz handeln. Aufgrund des direkten Zusammenhangs zwischen der Wellenlänger und dem Grenzwinkel der Reflexion $\Theta_c$ ist das Winkelintervall, in dem eine Oberfläche Strahlung reflektiert, wellenlängenabhängig.

Zur Erzeugung eines Neutronenstrahls mit einer bestimmten Wellenlänge bzw. Energie, wird der die Neutronenquelle verlassende Neutronenstrahl oft an einem Monochromator reflektiert. Bei dieser Reflexion werden neben der gewünschten Energie immer auch höhere Ordnungen mit dem Vielfachen dieser Energie reflektiert. Diese Anteile des Neutronenstrahls sind (meist) unerwünscht und sollen eliminiert werden. Zur Entfernung der höheren Ordnungen wird oft die Streuung in Kristallen eingesetzt. An Reflektometern, die mit kalten Neutronen arbeiten, wird z. B. meist ein gekühlter Be-Kristall verwendet, der Neutronen oberhalb einer Energie von etwa 5 meV in alle Richtungen streut und damit aus dem direkten Strahl, der bei Reflektometern nur eine Divergenz von weniger als 0,1° aufweist, nahezu vollständig entfernt. Die beiden Nachteile dieser Lösung bestehen darin, dass der Be-Kristall permanent mit flüssigem Stickstoff gekühlt werden muss und dass diese Anordnung gesondert abgeschirmt werden muss, da die Neutronen durch den Be-Kristall unkontrolliert in alle Richtungen gestreut werden.

Zur gezielten spektralen Gestaltung von Neutronenstrahlen oder -pulsen ist aus der DE 102 03 591 A1 eine neutronenoptische Bauelementanordnung mit einem geknickten Kanal mit zwei parallel einander gegenüberliegenden Superspiegeln bekannt, bei der zur Erzielung einer großen Anwendungsbreite Neutronen von zwei unterschiedlichen Moderatoren, die jeweils verschiedene Wellenlängen haben, zusammengeführt werden, sodass ein überlagerter Neutronenstrahl mit einem Multispektrum entsteht. Hier werden die Neutronen des einen Monochromators transmittiert und in Flugrichtung und Wellenlängenverteilung nicht verändert, während die Neutronen des zweiten Monochromators einmal reflektiert werden, wodurch sich die Flugrichtung, aber nicht die Wellenlängenverteilung verändert. Eine gezielte Einstellung einzelner Wellenlängenbereiche innerhalb des bestimmungsgemäßen Spektrums eines einzelnen Moderators erfolgt nicht. Die Selektion eines bestimmten Wellenlängenspektrums aus einem Neutronenstrahl ist mit dieser Lösung nicht zu realisieren. Weiter hat das System eine Länge von einigen Metern, der Transport der Neutronen erfolgt in Luft bzw. im Vakuum, und es gibt keine Absorptionsschichten und keine Möglichkeit, den Strahl zu polarisieren.

In der DE 198 44 300 A1 wird ein neutronenoptisches Bauelement zur gezielten Beeinflussung eines Neutronenstrahls vorgestellt, das als Polarisator oder als Kollimator ausgebildet ist und aus einer sich wiederholenden Schichtenfolge aus neutronenleitenden Schichten und neutronenselektierenden Schichten besteht. Die neutronenleitende Schicht besteht dabei aus einer Metallfolie, die zwischen spinselektiv reflektierenden Schichten oder zwischen absorbierenden Schichten oder zwischen einer absorbierenden Schicht und einer spinselektiv reflektierenden Schicht angeordnet ist. Diese Schichtenfolgen sind für die Anwendung als Polarisator in einer Ebene mit einem Krümmungsradius versehen, damit jedes Neutron mindestens einmal durch eine neutronenselektierende Schicht reflektiert bzw. absorbiert wird. Eine wellenlängenselektive Beeinflussung der Neutronen ist durch diese Anordnung zwar möglich, da die Beschichtung einen endlichen Grenzwinkel aufweist. Für den Zweck der vorliegenden Erfindung ist sie jedoch ungeeignet, da ein Bender die eintretenden Neutronen aus ihrer Flugbahn ablenkt. Sie werden dabei in ein breites Winkelintervall gestreut und können auch durch die Passage durch einen zweiten Bender nicht mehr auf ihre frühere Flugbahn gebracht werden. Auch die Ausbildung als Kollimator erfüllt nicht den gewünschten Zweck, weil in diesem Fall keine Energieselektion auftritt und damit auch die höheren Energien transmittiert werden.

In DE 10 2004 031 934 A1 ist ein strahlungsoptisches Bauelement mit einer neutronenleitenden Schicht, die beidseitig mit einer strahlungsreflektierenden Schicht versehen ist, und die wiederum mit einer neutronenabsorbierenden Schicht versehen ist, bekannt. Der Einfall des Neutronenstrahls erfolgt parallel zu den Wänden der neutronenleitenden Schicht bzw. senkrecht auf die Eintrittsfläche des dort dargestellten strahlungsoptischen Bauelements.

Die Aufgabe der Erfindung besteht darin, ein Verfahren zur Positionierung eines strahlungsoptischen Bauelements der eingangs genannten Art anzugeben, wodurch ein Neutronenstrahl mit einer definierten Wellenlänge erzeugt werden kann, der keine höheren Ordnungen aufweist, wobei das Bauelement einfach aufgebaut, handhabbar und somit relativ störunanfällig und kostengünstig sein soll, eine geringe Aufbaulänge aufweist und nicht gesondert abgeschirmt werden muss. Der Neutronenstrahl soll in seiner Richtung nicht verändert werden, und es soll möglich sein, den Strahl zu polarisieren.

Vorhandene Sicherheitsaspekte sollen berücksichtigt, zusätzliche Risiken sollen vermieden werden.

Diese Aufgabe wird erfindungsgemäß gelöst durch ein Verfahren zur Positionierung eines strahlungsoptischen Bauelements mit den Merkmalen des Anspruchs 1. Bei dem erfindungsgemäßen Verfahren zur Positionierung eines strahlungsoptischen Bauelements wird die neutronenleitende Schicht des strahlungsoptischen Bauelements in einem Anstellwinkel zur Ausbreitungsrichtung des zu beeinflussenden Neutronenstrahls in diesem angeordnet und der Anstellwinkel $\Theta$ aus der Gleichung $L = n * 2* d/\tan \Theta$ ermittelt, wobei L die Länge der neutronenleitenden Schichten in Flugrichtung der Neutronen bedeutet und n eine ganze Zahl $\geq 1$ ist, so dass jedes Neutron unterhalb einer Grenzenergie $E_G$, die durch $\Theta_c$ gegeben ist, jeweils an jeder der beiden strahlungsreflektierenden Schichten mindestens einmal reflektiert wird, während die Neutronen oberhalb einer Grenzenergie $E_G$, jeweils durch eine der beiden strahlungsreflektierenden Schichten transmittiert werden und durch die in Flugrichtung der Neutronen hinter diesen angeordneten absorbierenden Schichten absorbiert werden.

Die neutronenleitende Schicht stellt den Kanal dar und weist ebene parallel zueinander angeordnete Wände auf. Das strahlungsoptische Bauelement besteht aus einer oder einer Vielzahl von solchen beschriebenen Schichtenfolgen. Die neutronenleitende Schicht besteht vorteilhafterweise aus einem Si- Wafer, der beidseitig mit den reflektierenden Schichten und den absorbierenden Schichten versehen ist.

Bei dem strahlungsoptischen Bauelement, das entsprechend der technischen Lehre des Hauptanspruchs positioniert wird, werden die physikalischen Effekte der Totalreflexion und der Bragg-Reflexion an einer Grenzfläche ausgenutzt. Das Snellius-Gesetz besagt, dass der Grenzwinkel, unterhalb dessen Totalreflexion auftritt, bestimmt ist durch das Verhältnis der optischen Dichten der beiden Medien, die an der Grenzfläche aneinandergrenzen. Für Neutronen als Teilchenwelle gilt das gleiche Gesetz für die Totalreflexion wie für Licht. Als spiegelnde Grenzfläche dienen eine Einzelschicht (Totalreflexion) oder ein Schichtsystem (Bragg-Reflexion), bestehend aus vielen Einzelschichten mit alternierenden Streueigenschaften ("Streulänge"). Der Grenzwinkel des Neutronenspiegels ist allerdings sehr viel kleiner als für die optische Glasfaser und hängt zudem von der Wellenlänge der Neutronen ab. Für Nickel, das Element mit dem höchsten Totalreflexionswinkel, beträgt dieser Winkel etwa 1° mal Wellenlänge der Neutronen in Nanometer, also etwa 0,5° für eine Wellenlänge von 0,5 nm. Durch Verwendung von Multischichten, wie vollständigen oder teilweisen Superspiegeln, kann ein höherer Grenzwinkel $\Theta_c$ erreicht werden.

Daraus folgt, dass Neutronen mit einer höheren Energie, die einer geringeren Wellenlänge entspricht, bis zu einem kleineren Grenzwinkel eine Totalreflexion erfahren. Treffen sie dagegen mit einem Winkel oberhalb des Grenzwinkels auf die reflektierende Schicht, werden sie an dieser nicht reflektiert, sondern treten durch diese hindurch.

Das strahlungsoptische Bauelement, das als Tiefpassfilter ausgelegt ist, wird nun erfindungsgemäß mit einem derartigen Anstellwinkel $\Theta$ im Neutronenstrahl angeordnet, dass nur Neutronen mit Energien unterhalb des Wertes, der durch den Grenzwinkel $\Theta_c$ der reflektierenden Schicht gegeben ist, an dieser reflektiert werden. Alle anderen Neutronen mit Energien oberhalb des Wertes, der durch $\Theta_c$ gegeben ist, werden nicht reflektiert, sondern werden durch die reflektierende Schicht transmittiert und in der dahinter angeordneten neutronenabsorbierenden Schicht absorbiert.

Die neutronenleitende Schicht weist in Flugrichtung der Neutronen eine derartige Länge auf, dass jedes Neutron, das im gewünschten Energie- und Winkelbereich liegt, an jeder der reflektierenden Schichten, die an den beiden Seiten der neutronenleitenden Schicht angeordnet sind, mindestens einmal reflektiert wird. Dadurch verlässt das Neutron das strahlungsoptische Bauelement mit dem gleichen Winkel wie es eingetreten ist, d. h. der Neutronenstrahl wird in seiner Richtung nicht verändert.

Dadurch, dass alle anderen Neutronen, mit Energien oberhalb des Wertes, der durch $\Theta_c$ gegeben ist, nicht reflektiert, sondern durch die reflektierende Schicht transmittiert und dann in der dahinter angeordneten neutronenabsorbierenden Schicht absorbiert werden, verlassen nur Neutronen, die die gewünschte Maximalenergie aufweisen, in ihrer Einfallsrichtung das strahlungsoptische Bauelement.

Der Anstellwinkel $\Theta$ des strahlungsoptischen Bauelements im Neutronenstrahl wird gebildet durch den Winkel zwischen der Ebene der neutronenleitenden Schicht und der Ausbreitungsrichtung des Neutronenstrahls und liegt bei etwa 1°. Daher sind die Eintrittsfläche, durch die die Neutronen in die neutronenleitende Schicht eintreten und die Austrittsfläche, durch die die Neutronen die neutronenleitende Schicht verlassen, nahezu senkrecht zur Ebene des Neutronenstrahls (außerhalb des Bauelements) ausgerichtet.

Die Intensität des transmittierten Neutronenstrahls hängt von seinem Eintrittswinkel ab: Der Intensitätsverlauf ist eine Dreiecksfunktion, bei der Neutronen, die in Richtung der Strahlachse fliegen, zu 100% transmittiert werden. Dieser Wert sinkt für Einfallswinkel $\alpha$ relativ zur Strahlachse jeweils bei $\alpha = \pm\Theta/2$ auf 0, wobei hier $\Theta$ der Anstellwinkel des Bauelements im Strahl ist. Das heißt, dass das Bauelement am besten für Divergenzen geeignet ist, die klein gegen $\Theta$ sind.

Die Neutronen, die wegen ihrer größeren Divergenz das Bauelement nicht in der Einfallsrichtung verlassen, treten bei Einfallswinkeln von $\Theta\pm\Theta/2$ zum Teil durch das Bauelement hindurch bzw. werden um den Winkel $2\Theta$ gegenüber der Einfallsrichtung abgelenkt und müssen durch entsprechend angebrachte Absorber daran gehindert werden, die Probe zu treffen. An einem Reflektometer wird das durch die bereits vorhandenen Schlitze gewährleistet. In diesem Fall ist eine gesonderte Abschirmung für die unerwünschten Neutronen, wie sie bei den Vorrichtungen nach dem Stand der Technik benötigt wird, bei dem erfindungsgemäßen Bauelement nicht erforderlich.

Die neutronenleitenden Schichten (Kanäle) bestehen aus einem Si-Wafer oder einer Metallfolie. Bei einer Kanalbreite der neutronenleitenden Schicht, die in der Größenordnung von 0,01 bis 1 Millimeter liegt und der Dicke des Wafers bzw. der Metallfolie entspricht, beträgt die Länge des Kanals, die der Länge des Wafers und somit der Baulänge des strahlungsoptischen Bauelements entspricht, weniger als 100 mm.

Damit das zu positioenierende Bauelement kompakt ausgebildet ist, werden mehrere der zuvor beschriebenen Schichtenfolgen zu einem Schichtenpaket zusammengefügt. Die Kanalhöhe und die Stärke des Schichtenpakets werden so gewählt, dass der Querschnitt des strahlungsoptischen Bauelements den gesamten Querschnitt des Neutronenstrahls abdeckt. Beim Zusammenfügen mehrerer Schichtenfolgen zu einem kompakten strahlungsoptischen Bauelement werden die einzelnen Schichtenfolgen derart parallel aneinandergefügt, dass die Eintrittsflächen und die Austrittsflächen aller Schichtenfolgen jeweils eine nahezu ebene Fläche bilden.

Vorteilhafte Ausgestaltungen des strahlungsoptischen Bauelements können den Unteransprüchen entnommen werden.

Beispielsweise können die reflektierenden Schichten des strahlungsoptischen Bauelements als Dünnschichtmonochromatoren ausgebildet sein. Soll das strahlungsoptische Bauelement für größere Wellenlängenintervalle ausgelegt werden, wird man die reflektierenden Schichten in Form von Superspiegeln ausbilden. Bei den Superspiegeln ist der Grenzwinkel um einen Faktor m = 2 bis m = 3 größer als bei normalen Neutronenspiegeln aus einer Nickelschicht. Für Superspiegel werden Schichtmaterialien verwendet, bei denen sich die "Neutronenstreulänge" möglichst stark unterscheidet, wie bei Ni und Ti.

Bildet man die reflektierenden Schichten als spinselektiv reflektierende Schichten aus, so verlässt ein polarisierter Neutronenstrahl das erfindungsgemäße Bauelement. Damit kann im weiteren Strahlengang auf einen Polarisator verzichtet werden, der einen zusätzlichen Intensitätsverlust zur Folge hätte.

Um mit dem in einem Anstellwinkel Θ zur Ausbreitungsrichtung des zu beeinflussenden Neutronenstrahls positionierten strahlungsoptischen Bauelement zusätzlich zur Energieselektion wahlweise einen polarisierten oder einen nicht polarisierten Neutronenstrahl erzeugen zu können, ohne aufwändige Umbaumaßnahmen am Experimentierplatz vornehmen zu müssen, kann das Bauelement so ausgeführt sein, dass zwei Schichtenpakete aufgebaut werden, wobei in einem Schichtenpaket die reflektierenden Schichten beide Spinzustände reflektieren und bei dem anderen Schichtenpaket die reflektierenden Schichten als spinselektiv reflektierende Schichten ausgeführt sind. Beide Schichtenpakete sind so angeordnet, dass sie mittels einer Verstelleinrichtung wechselweise in den Neutronenstrahl einfahrbar sind.

Durch die Doppelreflexion an den beiden Kanalwänden wird die Selektivität des Bauelements quadriert. Wird diese Baulänge vervielfacht, so dass vier, sechs oder mehr Reflexionen auftreten, erhöht sich die Selektivität weiter, und es können sehr hohe Polarisationsgrade erzielt werden.

Mittels dieses strahlungsoptischen Bauelements können die nicht erwünschten Neutronen, deren Flugrichtung in einem Intervall von ±Θ/2 um die Flugrichtung herum liegt, stark reduziert werden. Deren Transmission beträgt weniger als 1 %.

Soll für den Fall eines einfallenden Strahls mit Divergenzen > ± Θ/2 erreicht werden, dass durch das strahlungsoptische Bauelement auch nahezu keine Neutronen mit diesen höheren Winkeln und einer nicht gewünschten Wellenlänge (Energie) hindurchtreten, müssen zusätzliche Vorkehrungen getroffen werden. Dazu sind Vorrichtungen vor dem strahlungsoptischen Bauelement anzuordnen, die die Divergenz des Neutronenstrahls auf Werte < ± Θ/2 reduzieren. Vorteilhafterweise kann dazu ein Kollimator verwendet werden, der parallel zum Neutronenstrahl (mit einem Anstellwinkel von Θ = 0°) angeordnet ist.

Die Vorteile der Erfindung bestehen darin, dass durch die erfindungsgemäße Positionierung eines strahlungsoptischen Bauelements, d.h. in einem Anstellwinkel Θ zur Ausbreitungsrichtung des zu beeinflussenden Neutronenstrahls, ein Teilneutronenstrahl mit einem gewünschten Energiebereich aus diesem Neutronenstrahl gezielt herausgefiltert werden kann, ohne dass die Richtung des Neutronenstrahls verändert wird. Da die Neutronen mit einer unerwünscht hohen Energie im Bauelement absorbiert werden, ist meist keine gesonderte Abschirmung erforderlich. Das strahlungsoptische Bauelement ist sehr kompakt und hat eine sehr geringe Länge, wodurch es direkt hinter dem Monochromator (in der vorhandenen Abschirmung) angeordnet werden kann. Werden die reflektierenden Schichten als spinselektiv reflektierende Schichten ausgelegt, funktioniert das Tiefpassfilter gleichzeitig als Polarisator.

Dadurch, dass das im Winkel angestellte strahlungsoptische Bauelement sehr kompakt ausgeführt ist und geringe Abmessungen aufweist, können ein nicht polarisierendes und ein polarisierendes Tiefpassfilter derart miteinander verbunden werden, dass ohne aufwändige Umbaumaßnahmen polarisierte oder nicht polarisierte Neutronenstrahlen erzeugt werden können.

Die Erfindung soll anhand von Ausführungsbeispielen näher erläutert werden. Die dazugehörigen Zeichnungen zeigen:

Fig. 1 Ausführung als nicht polarisierendes Tiefpassfilter
Fig. 2 Ausführung als polarisierendes Tiefpassfilter
Fig. 3 Ausführung als kompaktes Bauelement

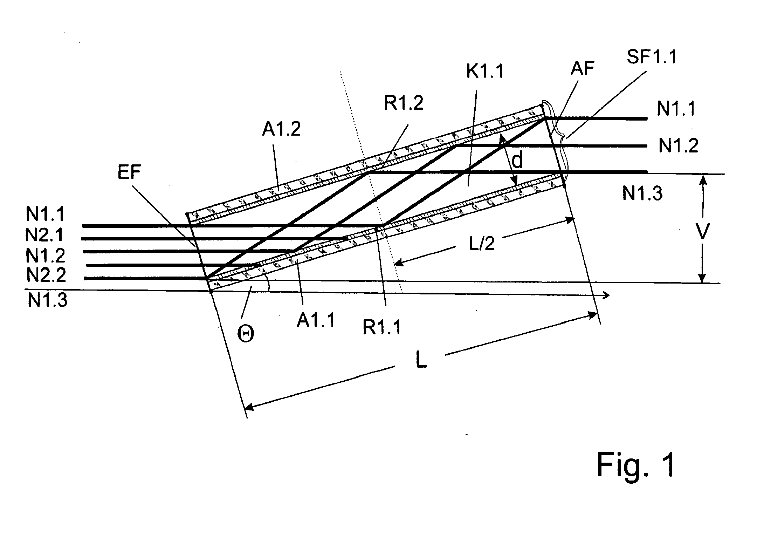

In Fig. 1 ist ein strahlungsoptisches Bauelement in einem Anstellwinkel $\Theta$ zur Ausbreitungsrichtung des zu beeinflussenden Neutronenstrahls **N1.1, N2.1, N1.2, N2.2, N1.3** angeordnet. Dieses Bauelement ist nicht als polarisierendes Tiefpassfilter ausgebildet ist. Mit diesem Bauelement sollen Neutronen mit Energien über einer festgelegten Grenzenergie herausgefiltert werden. Es ist beispielhaft eine Schichtenfolge **SF1.1** dargestellt. Der Kanal **K1.1,** die neutronenleitende Schicht, besteht hier aus einem Si-Wafer, dessen Stärke der Kanalbreite **d** entspricht. Beide Seitenflächen des Kanals **K1.1** sind jeweils mit einer reflektierenden Schicht **R1.1, R1.2** beschichtet, die Neutronen bis zu einem bestimmten Grenzwinkel $\Theta_c$ reflektiert. Die reflektierenden Schichten **R1.1, R1.2** sind im Beispiel als Superspiegel ausgeführt. Da der Grenzwinkel $\Theta_c$ des Neutronenspiegels von der Energie der Neutronen abhängig ist, ist es möglich, durch die Wahl des Anstellwinkels $\Theta$ zu erreichen, dass nur Neutronen mit einer geringeren Energie **E1 < EG** als der definierten Grenzenergie **EG** reflektiert werden. Neutronen mit höheren Energien **E2 > EG** durchdringen diese reflektierenden Schichten **R1.1, R1.2**. Die beiden reflektierenden Schichten **R1.1, R1.2** sind wiederum jeweils mit einer absorbierenden Schicht **A1.1, A1.2** versehen. Somit treten Neutronen, die nicht durch die reflektierenden Schichten **R1.1, R1.2** reflektiert werden, durch diese hindurch und werden in den absorbierenden Schichten **A1.1, A1.2** absorbiert. Die beschriebene Schichtenfolge **SF1.1** wird mit einem derartigen Anstellwinkel $\Theta$ in dem Neutronenstrahl angeordnet, dass die herauszufilternden Energieniveaus über dem Grenzwinkel $\Theta_c$ liegen. Im gewählten Beispiel beträgt der Anstellwinkel $\Theta$ ca. 1,1°, wodurch Neutronen mit einer Energie > 2,7 meV, entsprechend einer Wellenlänge < 0,55 nm nicht mehr an den Superspiegeln reflektiert werden, wenn diese einen kritischen Winkel von m = 2 haben.

Die Länge **L** des Bauelements wird bei einer Kanalbreite **d** = 0,15 mm und einem Anstellwinkel $\Theta$ = 1,1°, wie folgt berechnet:

$$L = 2* \ 0,15 \ mm / tan \ 1,1° = 15,6 \ mm.$$

Die Intensitätsabschwächung von Neutronen der Wellenlänge 0,55 nm im Silizium beläuft sich über diese Länge auf 5 %.

Nachfolgend werden der Strahlengang und damit die Wirkungsweise anhand von beispielhaft dargestellten Neutronen beschrieben.
Die Neutronen **N1.1, N1.2, N1.3** sind Neutronen, deren Energie **E1 < EG** ist.
Diese Neutronen treten durch die Eintrittsfläche **EF** in den Kanal **K1.1** ein und treffen in unterschiedlichen Entfernungen von der Eintrittsfläche **EF** auf einen ersten Superspiegel **R1.1**. Das Neutron **N1.3,** dessen Flugbahn dem unteren Rand des eintretenden Neutronenstrahls entspricht, trifft am Anfang des Kanals **K1.1.** auf die erste reflektierende Schicht **R1.1** und wird, da seine Energie **E1 < EG** ist, am Superspiegel **R1.1** reflektiert und weiter durch den Kanal **K1.1** transmittiert bis es in der Mitte des Kanals **K1.1,** in der Entfernung von 1/2L von der Eintrittsfläche **EF,** auf den zweiten Superspiegel **R1.2** trifft. Hier wird es ein zweites Mal reflektiert und verlässt durch die Austrittsfläche **AF,** am unteren Rand den Kanal **K1.1.** Das Neutron **N1.1,** dessen Flugbahn dem oberen Rand des eintretenden Neutronenstrahls entspricht, trifft in der Mitte des Kanals **K1.1,** in der Entfernung 1/2L von der Eintrittsfläche **EF** auf den ersten Superspiegel **R1.1** und wird, da seine Energie **E1 < EG** ist, am Superspiegel **R1.1** reflektiert und weiter durch den Kanal **K1.1** transmittiert bis es am Ende des Kanals **K1.1,** auf den zweiten Superspiegel **R1.2** trifft. Hier wird es ein zweites Mal reflektiert und verlässt durch die Austrittsfläche **AF,** am oberen Rand den Kanal **K1.1.** Das Neutron **N1.2** trifft in einer Entfernung von der Eintrittsfläche **EF,** die zwischen 0 und 1/2L liegt auf die erste reflektierende Schicht **R1.1.** Nach der Reflexion am Superspiegel **R1.1** wird es durch den Kanal **K1.1** transmittiert, bis es in einer Entfernung von der Eintrittsfläche, die zwischen 1/2L und L liegt, auf den zweiten Superspiegel **R1.2** trifft. Hier wird es ein zweites Mal reflektiert und verlässt durch die Austrittsfläche **AF,** zwischen dem oberen und dem unteren Rand den Kanal **K1.1.**

Dadurch, dass die erwünschten Neutronen **N1.1, N1.2, N1.3** im strahlungsoptischen Bauelement zweimal reflektiert werden, verlassen sie den Kanal **K1.1** an der Austrittsfläche **AF** mit dem gleichen Winkel, mit dem sie durch die Eintrittsfläche **EF** in den Kanal **K1.1** eingetreten sind. D. h. der eintretende Neutronenstrahl und der austretende Neutronenstrahl verlaufen parallel und weisen lediglich einen geringen Versatz **V** auf, der mit **2d** durch die doppelte Breite des Kanals **K1** gegeben ist. Im gewählten Beispiel mit **d** = 0,15 mm beträgt der Versatz **V** =0,3 mm.

Die Neutronen **N2.1** und **N2.2** sind unerwünschte Neutronen, deren Energie **E2 > EG** ist. Diese Neutronen treten ebenfalls durch die Eintrittsfläche **EF** in den Kanal **K1.1** ein und treffen in unterschiedlichen Entfernungen von der Eintrittsfläche **EF** auf den ersten Superspiegel **R1.1**. Da ihre Energie **E2 > EG** ist, werden sie am Superspiegel **R1.1** nicht reflektiert und treten durch diesen hindurch. Sie treffen nun auf die absorbierende Schicht **A1.1** und werden durch diese absorbiert. Dadurch, dass die nicht erwünschten Neutronen **N2.1** und **N2.2** absorbiert wurden, können sie das strahlungsoptische Bauelement nicht in unkontrollierten Richtungen verlassen. Somit ist keine gesonderte Abschirmung erforderlich.

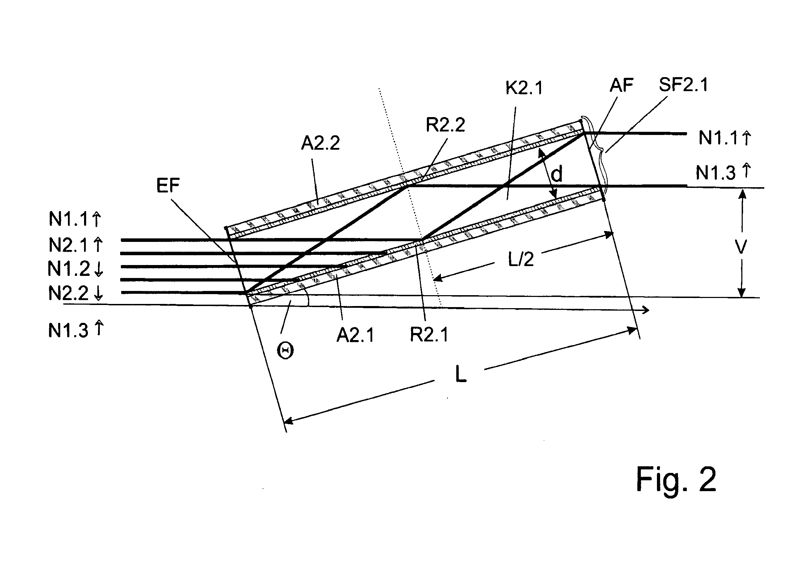

In der Fig. 2 ist eine weitere Ausführung des in einem Anstellwinkel $\Theta$ zur Ausbreitungsrichtung des zu beeinflussenden Neutronenstrahls **N1.1, N2.1, N1.2, N2.2, N1.3** positionierten strahlungsoptischen Bauelements dargestellt, das hier als polarisierendes Tiefpassfilter (Polarisator) ausgebildet ist. Mit diesem Bauelement sollen zusätzlich zur Energieselektion Neutronen mit der unerwünschten Spinkomponente herausgefiltert werden.

Es ist beispielhaft eine Schichtenfolge **SF2.1** dargestellt. Der Kanal **K2.1,** die neutronenleitende Schicht, besteht hier, wie bei der ersten Ausführung aus einem Si-Wafer, dessen Stärke der Kanalbreite **d** entspricht. Beide Seitenflächen des Kanals **K2.1** sind hier, abweichend zur ersten Ausführung, jeweils mit einer spinselektiv reflektierenden Schicht **R2.1, R2.2** beschichtet, die Neutronen bis zu einem bestimmten Grenzwinkel $\Theta_c$ spinselektiv reflektiert. Die spinselektiv reflektierenden Schichten **R2.1, R2.2** reflektieren im gewählten Beispiel nur die spin-up-Komponente des eintretenden unpolarisierten Neutronenstrahls. Die spin-down-Komponente wird durch die spinselektiv reflektierenden Schichten **R2.1, R2.2** transmittiert und trifft nun auf die in Flugrichtung dahinter angeordneten absorbierenden Schichten **A2.1, A2.2** und wird durch diese absorbiert.

Hinsichtlich der Energieselektion der Neutronen wirkt diese Schichtenfolge **SF2.1** analog der in der Figur 1 dargestellten Schichtenfolge **SF1.1,** d. h. die Neutronen mit einer Energie **E2 > E$_G$** werden, unabhängig von ihrer spin-Richtung an den spinselektiv reflektierenden Wänden **R2.1, R2.2** nicht reflektiert und werden durch die absorbierenden Schichten **A2.1, A2.2** absorbiert.

Nachfolgend werden der Strahlengang und damit die Wirkungsweise der Schichtenfolge **SF2.1** anhand von beispielhaft dargestellten Neutronen beschrieben. Die Neutronen **N1.1$^\uparrow$, N1.2$^\downarrow$, N1.3$^\uparrow$** eines unpolarisierten Neutronenstrahls sind Neutronen, deren Energie **E1 < E$_G$** ist. Dabei weisen die Neutronen **N1.1$^\uparrow$** und **N1.3$^\uparrow$** die gewünschte spin-Richtung (spin-up) auf, während das Neutron **N1.2$^\downarrow$** die nicht gewünschte spin-Richtung (spin-down) aufweist. Die Neutronen **N1.1$^\uparrow$** und **N1.3$^\uparrow$** treten durch die Eintrittsfläche **EF** in den Kanal **K2.1** ein und treffen in unterschiedlichen Entfernungen von der Eintrittsfläche **EF** auf einen ersten spinselektiv reflektierenden Superspiegel **R2.1.** Da ihre Energie **E1 < E$_G$** ist und ihre spin-Richtung der gewünschten spin-up-Richtung entspricht, werden sie am Superspiegel **R2.1** reflektiert und werden weiter durch den Kanal **K2.1** transmittiert bis sie ein zweites Mal, in einer größeren Entfernung von der Eintrittsfläche **EF,** auf den zweiten Superspiegel **R2.2** treffen. Hier werden sie ein zweites Mal reflektiert und verlassen durch die Austrittsfläche **AF** den Kanal **K2.1.**

Dadurch, dass die erwünschten Neutronen **N1.1$^\uparrow$** und **N1.3$^\uparrow$** jeweils an den spinselektiv reflektierenden Superspiegel **R2.1** und **R2.2** einmal, insgesamt zweimal reflektiert werden, verlassen sie den Kanal **K2.1** an der Austrittsfläche **AF** mit dem gleichen Winkel, mit dem sie durch die Eintrittsfläche **EF** in den Kanal **K2.1** eingetreten sind.

Das Neutron **N1.2$^\downarrow$** eines unpolarisierten Neutronenstrahls hat eine Energie **E1 < E$_G$** und weist die nicht gewünschte spin-Richtung (spin-down) auf. Das Neutron **N1.2$^\downarrow$** tritt ebenfalls durch die Eintrittsfläche **EF** in den Kanal **K2.1** ein und trifft auf den ersten spinselektiv reflektierenden Superspiegel **R2.1.** Da seine Energie zwar **E1 < E$_G$** ist aber seine spin-Richtung nicht der gewünschten spin-Richtung entspricht, wird dieses Neutron **N1.2$^\downarrow$**, mit der spin-down-Komponente, nicht am Superspiegel **R2.1** reflektiert sondern transmittiert und durch die dahinter angeordnete absorbierende Schicht **A2.1** absorbiert.

Die Neutronen **N2.1$^\uparrow$** und **N2.2$^\downarrow$** eines unpolarisierten Neutronenstrahls sind unerwünschte Neutronen, deren Energie **E2 > EG** ist und die beide unterschiedliche spin-Richtungen aufweisen. Diese Neutronen treten ebenfalls durch die Eintrittsfläche **EF** in den Kanal **K2.1** ein und treffen in unterschiedlichen Entfernungen von der Eintrittsfläche **EF** auf den ersten Superspiegel **R2.1.** Da ihre Energie **E2 > E$_G$** ist, werden sie am Superspiegel **R2.1,** unabhängig von ihrer spin-Richtung nicht reflektiert und treten durch diesen hindurch. Sie treffen nun auf die in Flugrichtung hinter dem Superspiegel **R2.1** befindliche absorbierende Schicht **A2.1** und werden durch diese absorbiert.

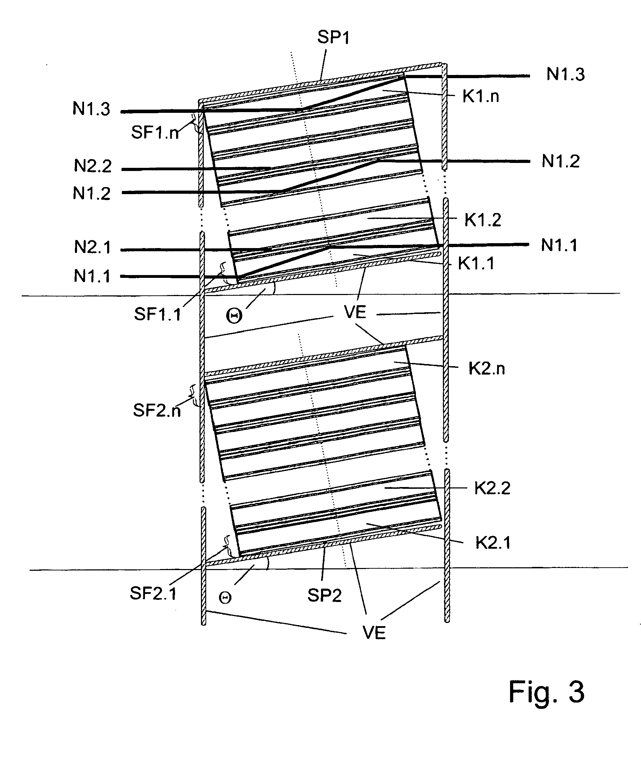

In der Fig. 3 ist ein in einem Anstellwinkel $\Theta$ zur Ausbreitungsrichtung des zu beeinflussenden Neutronenstrahls **N1.1, N2.1, N1.2, N2.2, N1.3** positioniertes strahlungsoptisches Bauelement in einer bevorzugten Ausführung dargestellt. Damit Neutronen mit einer unerwünscht hohen Energie, z. B. Neutronen mit höheren Ordnungen, aus einem Neutronenstrahl mit einem Querschnitt von ca. 50 mm x 10 mm mit dem strahlungsoptischen Bauelement herausgefiltert werden können, werden ca. 70 Schichtenfolgen **SF1.1** bis **SF1.n** zu einem Schichtenpaket **SP1** zusammengefügt. Die Schichtenfolgen **SF1.1** bis **SF1.n** werden parallel aneinandergefügt, wobei die jeweiligen Eintrittsflächen **EF** und die Austrittsflächen **AF** aller Schichtenfolgen **SF1.1** bis **SF1.n** jeweils eine nahezu ebene Fläche bilden. Dieses Schichtenpaket **SP1,** das eine Breite von ebenfalls 10 mm aufweist, ist ein kompakt aufgebautes Tiefpassfilter, das den Neutronenstrahl abdeckt. Dieses Tiefpassfilter filtert die Neutronen mit einer unerwünscht hohen Energie **E2 > E$_G$** aus dem eintretenden unpolarisierten Neutronenstrahl heraus, wie es anhand der Fig. 1 näher erläutert wurde.

Wird ein Schichtenpaket **SP2** analog aus ca. 70 Schichtenfolgen **SF2.1** bis **SF2.n** gemäß der Beschreibung zur Fig. 2 zusammengefügt, entsteht ein polarisierendes Tiefpassfilter, das neben den Neutronen mit einer unerwünscht hohen Energie **E2 > E$_G$** auch die Neutronen mit der nicht gewünschten Spin-Richtung aus dem eintretenden unpolarisierten Neutronenstrahl herausfiltert. Somit verlassen nur Neutronen in einem gewünschten Energiebereich und der gewünschten spin-Richtung das strahlungsoptische Bauelement.

Vorteilhafterweise sind die beiden Schichtenpakete **SP1** und **SP2** derart miteinander verbunden, dass jeweils ein Schichtenpaket mittels einer nicht näher dargestellten Verstelleinrichtung **VE** in den zu beeinflussenden Neutronenstrahl eingefahren ist. Es ist somit möglich, dass ohne aufwändige Umbaumaßnahmen ein polarisierter oder ein nicht polarisierter Neutronenstrahl in einem gewünschten Energiebereich erzeugt werden kann.

Im dargestellten Beispiel ist das Schichtenpaket **SP1** mit den Schichtenfolgen **SF1.1** bis **SF1.n**, die mit den nicht polarisierenden Superspiegeln **R1.1, R1.2** aufgebaut sind, in den Neutronenstrahl eingefahren. Somit werden aus dem Neutronenstrahl nur die Neutronen mit höheren Energien herausgefiltert; der austretende Neutronenstrahl ist unpolarisiert. Der austretende Neutronenstahl weist hinter dem strahlungsoptischen Bauelement die gleiche Richtung auf und ist lediglich um den Versatz **V**, der im gewählten Beispiel 0,3 mm beträgt, gegenüber dem eintretenden Neutronenstrahl versetzt.

**Patentansprüche**

1. Verfahren zur Positionierung eines strahlungsoptischen Bauelements zur Beeinflussung eines Neutronenstrahls in Bezug auf dessen Wellenlängenspektrum, aufweisend mindestens eine Schichtenfolge aus einer neutronenleitenden, ebene und parallele Wände aufweisenden Schicht mit einer Kanalbreite (d), die beidseitig mit einer bis zu einem kritischen Einfallswinkel $\Theta_c$ zur Schichtoberfläche ganz oder teilweise strahlungsreflektierenden Schicht versehen ist, und diese wiederum jeweils mit einer neutronenabsorbierenden Schicht versehen sind,
   **dadurch gekennzeichnet, dass**
   die neutronenleitende Schicht des strahlungsoptischen Bauelements in einem Anstellwinkel ($\Theta$) zur Ausbreitungsrichtung des zu beeinflussenden Neutronenstrahls in diesem angeordnet und der Anstellwinkel ($\Theta$) aus der Gleichung $L = n * 2 * d/\tan \Theta$ ermittelt wird, wobei L die Länge der neutronenleitenden Schichten **(K1.1, 1.K1.2, K1.n, K2.1, K2.2, K2.n)** in Flugrichtung der Neutronen **(N1.1, N1.2, N1.3, N2.1, N2.2)** bedeutet und n eine ganze Zahl $\geq$ 1 ist, so dass jedes Neutron **(N1.1, N1.2, N1.3)** unterhalb einer Grenzenergie **($E_G$)**, die durch $\Theta_c$ gegeben ist, jeweils an jeder der beiden strahlungsreflektierenden Schichten **(R1.1, R1.2, R2.1, R2.2)** mindestens einmal reflektiert wird, während die Neutronen **(N2.1, N2.2)** oberhalb einer Grenzenergie **($E_G$),** jeweils durch eine der beiden strahlungsreflektierenden Schichten **(R1.1, R1.2, R2.1, R2.2)** transmittiert werden und durch die in Flugrichtung der Neutronen hinter diesen angeordneten absorbierenden Schichten **(A1.1, A1.2, A2.1, A2.2)** absorbiert werden.

2. Verfahren zur Positionierung eines strahlungsoptischen Bauelements nach Anspruch 1,
   **dadurch gekennzeichnet, dass**
   die neutronenleitenden Schichten **(K1.1, 1.K1.2, K1.n, K2.1, K2.2, K2.n)** mit einer Kanalbreite **(d)** unter 1 mm verwendet werden.

3. Verfahren zur Positionierung eines strahlungsoptischen Bauelements nach Anspruch 1,
   **dadurch gekennzeichnet, dass**
   für die neutronenleitenden Schichten **(K1.1, 1.K1.2, K1.n, K2.1, K2.2, K2.n)** Si-Wafer verwendet werden.

4. Verfahren zur Positionierung eines strahlungsoptischen Bauelements nach Anspruch 1,
   **dadurch gekennzeichnet, dass**
   für die neutronenleitenden Schichten **(K1.1, 1.K1.2, K1.n, K2.1, K2.2, K2.n)** Metallfolien verwendet werden.

5. Verfahren zur Positionierung eines strahlungsoptischen Bauelements nach Anspruch 1,
   **dadurch gekennzeichnet, dass**
   für die reflektierenden Schichten **(R1.1, R1.2, R2.1, R2.2)** Superspiegel verwendet werden.

6. Verfahren zur Positionierung eines strahlungsoptischen Bauelements nach Anspruch 1,
   **dadurch gekennzeichnet, dass**
   für die reflektierenden Schichten **(R1.1, R1.2, R2.1, R2.2)** Dünnschichtmonochromatoren verwendet werden.

7. Verfahren zur Positionierung eines strahlungsoptischen Bauelements nach Anspruch 1,
   **dadurch gekennzeichnet, dass**
   für die reflektierenden Schichten **(R2.1, R2.2)** spinselektiv reflektierende Schichten verwendet werden.

8. Verfahren zur Positionierung eines strahlungsoptischen Bauelements nach Anspruch 1,
   **dadurch gekennzeichnet, dass**
   die Länge des gesamten Bauelements im Strahl weniger als 100 mm beträgt.

9. Verfahren zur Positionierung eines strahlungsoptischen Bauelements nach Anspruch 1,
   **dadurch gekennzeichnet, dass**
   mehrere Schichtenfolgen **(SF1.1, SF1.2, SF1.n)** zu einem Schichtpaket **(SP1)** zusammengefügt werden.

10. Verfahren zur Positionierung eines strahlungsoptischen Bauelements nach Anspruch 7,
   **dadurch gekennzeichnet, dass**
   mehrere Schichtenfolgen **(SF2.1, SF2.2, SF2.n)** zu einem Schichtpaket **(SP2)** zusammengefügt werden.

**11.** Verfahren zur Positionierung eines strahlungsoptischen Bauelements nach Anspruch 9 und 10, **dadurch gekennzeichnet, dass** beide Schichtpakete **(SP1, SP2)** parallel zueinander angeordnet und mechanisch miteinander verbunden werden.

**12.** Verfahren zur Positionierung eines strahlungsoptischen Bauelements nach Anspruch 11, **dadurch gekennzeichnet, dass** die Schichtpakete **(SP1, SP2)** mittels einer Verstelleinrichtung **(VE)** wechselweise in den Neutronenstrahl ein- bzw. ausgefahren werden.

## Claims

**1.** Method for positioning a radiation optical component to influence a neutron beam in relation to its wavelength spectrum, comprising at least one layer sequence made from a neutron-conducting layer having flat parallel walls with a channel width (d), provided on both sides with a layer that fully or partially reflects radiation up to a critical angle of incidence $\Theta_c$ to the surface layer, and these in turn each being provided with a neutron-absorbing layer, **characterized in that** the neutron-conducting layer of the radiation optical component is arranged in the neutron beam to be influenced at an approach angle ($\Theta$) to the propagation direction of the beam and the approach angle ($\Theta$) is determined from the equation $L = n * 2 * d/\tan \Theta$, where L indicates the length of the neutron-conducting layers (K1.1, K1.2, K1.n, K2.1, K2.2, K2.n) in the direction of travel of the neutrons (N1.1, N1.2, N1.3, N2.1, N2.2) and n is an integer $\geq$ 1, so that each neutron (N1.1, N1.2, N1.3) below a critical energy ($E_G$), which is given by $\Theta_c$, is reflected at least once at each of the two radiation-reflecting layers (R1.1, R1.2, R2.1, R2.2), while the neutrons (N2.1, N2.2) above a critical energy ($E_G$), are each transmitted by one of the two radiation-reflecting layers (R1.1, R1.2, R2.1, R2.2) and are absorbed by the absorbent layers (A1.1, A1.2, A2.1, A2.2) arranged behind these in the direction of travel of the neutrons.

**2.** Method for positioning a radiation optical device according to Claim 1, **characterized in that** the neutron-conducting layers (K1.1, 1.K1.2, K1.n, K2.1, K2.2, K2.n) with a channel width (d) of less than 1 mm are used.

**3.** Method for positioning a radiation optical device according to Claim 1, **characterized in that** Si wafers are used for the neutron-conducting layers (K1.1, 1.K1.2, K1.n, K2.1, K2.2, K2.n).

**4.** Method for positioning a radiation optical device according to Claim 1, **characterized in that** metal foils are used for the neutron-conducting layers (K1.1, 1.K1.2, K1.n, K2.1, K2.2, K2.n).

**5.** Method for positioning a radiation optical component according to Claim 1, **characterized in that** supermirrors are used for the reflective layers (R1.1, R1.2, R2.1, R2.2).

**6.** Method for positioning a radiation optical component according to Claim 1, **characterized in that** thin-film monochromators are used for the reflective layers (R1.1, R1.2, R2.1, R2.2).

**7.** Method for positioning a radiation optical component according to Claim 1, **characterized in that** spin-selective reflective layers are used for the reflective layers (R2.1, R2.2).

**8.** Method for positioning a radiation optical component according to Claim 1, **characterized in that** the length of the entire component in the beam is less than 100mm.

**9.** Method for positioning a radiation optical component according to Claim 1, **characterized in that** a plurality of layer sequences (SF1.1, SF1.2, SF1.n) are joined together to form a layer packet (SP1).

**10.** Method for positioning a radiation optical component according to Claim 7, **characterized in that** a plurality of layer sequences (SF2.1, SF2.2, SF2.n) are joined together to form a layer packet (SP2).

**11.** Method for positioning a radiation optical component according to Claim 9 and 10, **characterized in that** both layer packets (SP1, SP2) are arranged parallel to each other and are mechanically connected to each other.

**12.** Method for positioning a radiation optical component according to Claim 11, **characterized in that** the layer packets (SP1, SP2) are alternately inserted into and retracted from the neutron beam by means of an adjusting device (VE).

## Revendications

**1.** Procédé pour le positionnement d'un composant optique de rayonnement afin d'influencer un faisceau de neutrons en ce qui concerne le spectre de longueurs d'ondes de celui-ci, présentant au moins une suite de couches en une couche de conduction de neutrons présentant des parois planes et parallèles avec une largeur de canal (d), laquelle couche est munie des deux côtés d'une couche réfléchissant le rayonnement, entièrement ou partiellement, jusqu'à un angle d'incidence critique $\Theta_c$ par rapport à la surface de couche, et celles-ci étant respectivement à leur tour munies d'une couche d'absorption de neutrons, **caractérisé en ce que** la couche conduisant les neutrons du composant optique de rayonnement est disposée selon un angle de positionnement ($\Theta$) par rapport à la direction de propagation du faisceau de neutrons à influencer, à l'intérieur de celui-ci, et l'angle de positionnement ($\Theta$) étant déterminé grâce à l'équation $L = n*2\ d/\tan \Theta$, L signifiant la longueur des couches conduisant les neutrons (K1.1, 1K1.2, K1.n, K2.1, K2.2, K2.n) en direction de vol des neutrons (N1.1, N1.2, N1.3, N2.1, N2.2) et n étant un nombre entier $\geq 1$, de sorte que chaque neutron (N1.1, N1.2, N1.3) en-dessous d'une énergie de seuil ($E_G$), laquelle est donnée par $\Theta_c$, est réfléchi au moins une fois respectivement au niveau de chacune des deux couches réfléchissant le rayonnement (R1.1, R1.2, R2.1, R2.2), alors que les neutrons (N2.1, N2.2) au-dessus d'une énergie de seuil ($E_G$) sont respectivement transmis à travers l'une des deux couches réfléchissant le rayonnement (R1.1, R1.2, R2.1, R2.2) et sont absorbés par les couches d'absorption (A1.1, A1.2, A2.1, A2.2) disposées derrière celles-ci en direction de vol des neutrons.

2. Procédé pour le positionnement d'un composant optique de rayonnement selon la revendication 1, **caractérisé en ce que** les couches conduisant les neutrons (K1.1, 1K1.2, K1.n, K2.1, K2.2, K2.n) sont utilisées avec une largeur de canal (d) de moins de 1 mm.

3. Procédé pour le positionnement d'un composant optique de rayonnement selon la revendication 1, **caractérisé en ce que** l'on utilise des plaquettes Si pour les couches conduisant les neutrons (K1.1, 1 K1.2, K1.n, K2.1, K2.2, K2.n).

4. Procédé pour le positionnement d'un composant optique de rayonnement selon la revendication 1, **caractérisé en ce que** l'on utilise des pellicules métalliques pour les couches conduisant les neutrons (K1.1, 1K1.2, K1.n, K2.1, K2.2, K2.n).

5. Procédé pour le positionnement d'un composant optique de rayonnement selon la revendication 1, **caractérisé en ce que** l'on utilise des super-miroirs pour les couches réfléchissantes (R1.1, R1.2, R2.1, R2.2).

6. Procédé pour le positionnement d'un composant optique de rayonnement selon la revendication 1, **caractérisé en ce que** l'on utilise des monochromateurs à couche mince pour les couches réfléchissantes (R1.1, R1.2, R2.1, R2.2).

7. Procédé pour le positionnement d'un composant optique de rayonnement selon la revendication 1, **caractérisé en ce que** l'on utilise des couches à réflexion sélective en spin pour les couches réfléchissantes (R2.1, R2.2).

8. Procédé pour le positionnement d'un composant optique de rayonnement selon la revendication 1, **caractérisé en ce que** la longueur de l'ensemble du composant dans le faisceau est inférieure à 100 mm.

9. Procédé pour le positionnement d'un composant optique de rayonnement selon la revendication 1, **caractérisé en ce que** plusieurs suites de couches (SF1.1, SF1.2, SF1.n) sont assemblées en un paquet de couches (SP1).

10. Procédé pour le positionnement d'un composant optique de rayonnement selon la revendication 7, **caractérisé en ce que** plusieurs suites de couches (SF2.1, SF2.2, SF2.n) sont assemblées en un paquet de couches (SP2).

11. Procédé pour le positionnement d'un composant optique de rayonnement selon les revendications 9 et 10, **caractérisé en ce que** les deux paquets de couches (SP1, SP2) sont disposés parallèlement l'un par rapport à l'autre et sont reliés ensemble mécaniquement.

12. Procédé pour le positionnement d'un composant optique de rayonnement selon la revendication 11, **caractérisé en ce que** les paquets de couches (SP1, SP2) sont conduits en alternance dans le faisceau de neutrons ou hors de celui-ci à l'aide d'un dispositif de déplacement (VE).

Fig. 1

Fig. 2

EP 2 180 484 B1

Fig. 3

EP 2 180 484 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10203591 A1
- DE 19844300 A1
- DE 102004031934 A1